# EUROPEAN PATENT APPLICATION

(11) **EP 2 441 654 A1**
(43) Date of publication of application: **18.04.2012**
(21) Application number: 11183084.0
(22) Date of filing: 28.09.2011
(51) Int. Cl.: B62K 25/08, B62K 19/22, B62K 21/04

(54) **Bicycle assembly with fork and method of manufacturing**

(30) Priority: 13.10.2010 US 392901 P; 04.02.2011 US 21680
(71) Applicant: Specialized Bicycle Components, Inc., Morgan Hill, CA 95037 (US)
(72) Inventor: McAndrews, Michael, Capitola, CA California 95010 (US); Powers, Ron, Santa Cruz, CA California 95060 (US); Lampman, Brian Emery, Aptos, CA California 95003 (US)
(74) Representative: Becker Kurig Straus

(57) **Abstract**

A bicycle assembly can include a bicycle fork. The bicycle fork can have a steer tube, a leg, and a crown. The bicycle fork can also include adhesive used to connect the leg to the crown. A method of manufacturing an assembly for a bicycle can include applying adhesive, to bond metal on metal, to at least one of the leg and the crown, inserting a part of the leg into a part of the crown, the parts forming a slip fit, and curing the adhesive. A similar method can also be used to attach the steer tube to the crown.

## Description

### CROSS-REFERENCE TO RELATED APPLICATIONS

This application claims the benefit of U.S. Application No. 61/392,901, filed October 13, 2010, the entire contents of which are incorporated herein and made a part of this specification.

### BACKGROUND OF THE INVENTION

### Field of the Invention

The present invention relates generally to bicycle frame assemblies. More particularly, the invention relates to a fork assembly for a bicycle.

### Description of the Related Art

In the construction of bicycle suspension forks, it has long been an industry standard to use a "press fit" as the means for joining metal stanchion tubes to a forged metal crown. The stanchion tubes and crown of bicycle suspension forks are generally aluminum, but may be other materials such as steel, magnesium, or titanium. For example, many bicycles have a forged aluminum crown and either anodized aluminum or chromed steel stanchion tubes.

The junction formed on the fork by the connection of the stanchion tubes to the crown experiences high stress when in use. Thus, when using a press fit method to attach stanchion tubes to a crown the mating parts not only have to withstand the loads imparted during use but they must also have extra material to ensure these parts have the strength required to maintain the press fit as the high loads are applied during use. To maintain a strong press fit attachment, the "hoops" of the crown must have enough wall thickness to maintain the proper geometry as the stanchion tubes are pressed in with an interference fit. Also, to make this press fit attachment function correctly, the stanchion tube outer walls must have increased strength. This is achieved by increasing the wall thickness of the tube.

Also, the area of the stanchion tube just at the lower edge of the press fit junction becomes severely stressed making it the likely location for failure during fatigue loading. To correct this problem, even more material is applied to the wall thickness of the stanchion tubes to ensure the fork has the fatigue strength required to comply with the CEN (European Committee for Standardisation) test standards for bicycle suspension forks.

### SUMMARY OF THE INVENTION

There exists a need for improved bicycle forks, including bicycle suspension forks, as well as, improved methods of manufacturing bicycle forks. According to some embodiments, a method of manufacturing a bicycle fork eliminates the "press fit" method for attaching the stanchion tubes to the crown. According to some embodiments, a method of manufacturing a bicycle fork comprises attaching stanchion tubes to the crown using a high strength adhesive.

A bicycle assembly can include a bicycle suspension fork. The fork can comprise a steerer, first and second legs, a crown and adhesive portions. The first leg can have a first stanchion tube, a first lower leg portion and a first dropout. The first stanchion tube and the first lower leg portion can be configured for telescopic engagement such that an overall length of the first leg can vary. The second leg can have a second stanchion tube, a second lower leg portion and a second dropout. The second stanchion tube and the second lower leg portion can be configured for telescopic engagement such that an overall length of the second leg can also vary. The first and second stanchion tubes can be made of metal. The first and second legs can be configured to support a front wheel at the first and second dropouts.

The crown can be for connecting the first and second legs and the steerer. The crown can have first and second receiving portions, each receiving portion comprising metal. The first stanchion tube can be configured for assembly into the first receiving portion with a slip fit such that there is a first gap between an inner surface of the first receiving portion and an outer surface of the first stanchion tube. The second stanchion tube can be configured for assembly into the second receiving portion with a slip fit such that there is a second gap between an inner surface of the second receiving portion and an outer surface of the second stanchion tube.

A first adhesive portion can be used to secure the first stanchion tube within the first receiving portion. The first adhesive portion can be configured to be positioned in the first gap between the inner surface of the first receiving portion and the outer surface of the first stanchion tube. A second adhesive portion can be used to secure the second stanchion tube within the second receiving portion. The second adhesive portion can be configured to be positioned in the second gap between the inner surface of the second receiving portion and the outer surface of the second stanchion tube.

The crown can be made integrally with the steerer. In some embodiments, the crown has a third receiving portion comprising metal, the steerer comprising metal and configured for assembly into the third receiving portion with a slip fit such that there is a third gap between an inner surface of the third receiving portion and an outer surface of the steerer. A third adhesive portion can be used to secure the steerer within the third receiving portion and can be positioned in the third gap between the inner surface of the third receiving portion and the outer surface of the steerer.

According to some embodiments, a bicycle suspension fork can include a steerer configured to be received within a head tube of a bicycle frame, a first leg, a crown and at least one adhesive portion. The first leg can comprise a first stanchion tube and a first lower leg portion configured for telescopic engagement, the first stanchion tube comprising metal.

The crown can be used to connect the first leg and the steerer. The crown can have a first receiving portion comprising metal. The first stanchion tube can be configured for assembly into the first receiving portion with a first gap between the first receiving portion and the first stanchion tube. A first adhesive portion can be used to secure the first stanchion tube within the first receiving portion and can be configured to be positioned in the first gap between the first receiving portion and the first stanchion tube.

The bicycle suspension fork may also include a second leg having a second stanchion tube and a second lower leg portion the second stanchion tube comprising metal, and the first and second legs configured to support a first wheel. The crown can further comprise a second receiving portion comprising metal, the second stanchion tube configured for assembly into the second receiving portion with a second gap between the second receiving portion and the second stanchion tube. A second adhesive portion can be configured to be positioned in the second gap between the second receiving portion and the second stanchion tube.

A method of manufacturing an assembly for a bicycle can comprise one or more of the following steps. Providing components for a bicycle suspension fork. The components can include one or more of a first stanchion tube, a second stanchion tube, and a crown. The crown can have one, two or three receiving portions. The first and second stanchion tubes can be configured for assembly into a receiving portion. Also, in some embodiments, a steerer can be configured for assembly into a receiving portion.

The method can include applying a first portion of adhesive, to bond metal on metal, to at least one of the first receiving portion of the crown and an end portion of the first stanchion tube. The method can also include applying a second portion of adhesive, to bond metal on metal, to at least one of the second receiving portion of the crown, an end portion of the second stanchion tube and an end portion of the steerer. The method may further include applying a third portion of adhesive, to bond metal on metal, to at least one of the third receiving portion of the crown, an end portion of the second stanchion tube and an end portion of the steerer.

The method can include inserting the end portion of the first stanchion tube into the first receiving portion, the first stanchion tube being received into first receiving portion with a slip fit, the first portion of adhesive filling at least a portion of a gap between the first stanchion tube and the first receiving portion, the first portion of adhesive contacting both the first receiving portion and the end portion of the first stanchion tube.

The method may further include inserting the end portion of the second stanchion tube or the end portion of the steerer into the second receiving portion, either being received into the second receiving portion with a slip fit, the second portion of adhesive filling at least a portion of a gap between inserted component and the second receiving portion, the second portion of adhesive contacting both the second receiving portion and the end portion of the component. A third step of inserting either of the end portion of the second stanchion tube or the end portion of the steerer into the third receiving portion may also be included.

The method can include curing the first portion of adhesive such that the first stanchion tube is securely attached to the crown. The method may also include curing the second portion of adhesive and/or third portion of adhesive.

The method can also include one or more of forging the crown out of aluminum, and anodizing the first and/or second stanchion tubes.

### BRIEF DESCRIPTION OF THE DRAWINGS

These and other features, aspects and advantages are described below with reference to drawings of preferred embodiments, which are intended to illustrate but not to limit the present invention.

Figure 1 is a side view of an embodiment of a bicycle frame.

Figure 2 illustrates a bicycle suspension fork.

Figure 3 is a cross section of a portion of the bicycle suspension fork of Figure 2.

Figure 4 is a cross section of a portion of a bicycle fork.

Figure 5 shows a flow chart of a manufacturing method.

### DETAILED DESCRIPTION OF THE PREFERRED EMBODIMENT

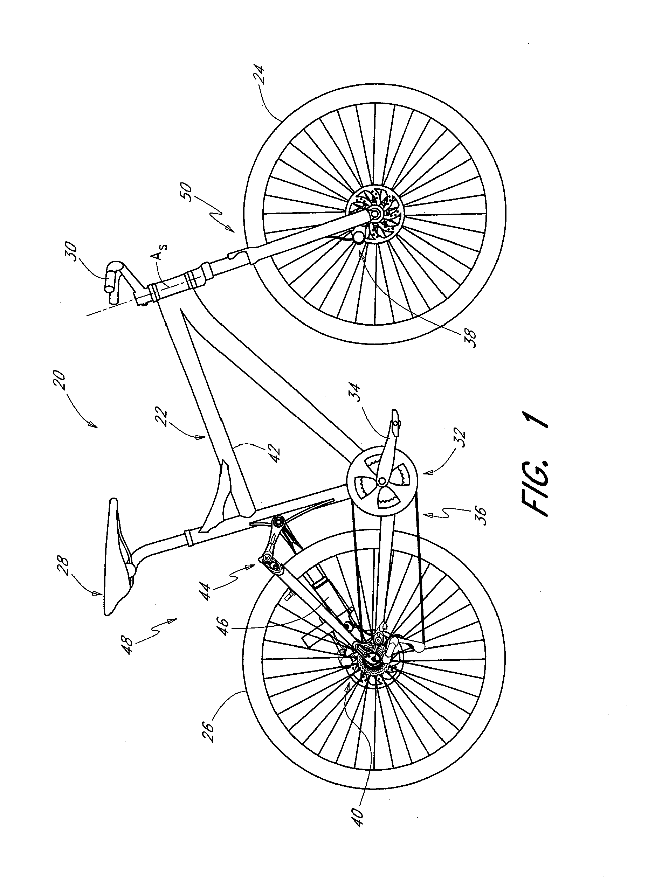

Figure 1 illustrates a bicycle, and more particularly, an off-road bicycle or mountain bike 20. To aid in the description of the mountain bike 20 and the present suspension assembly, certain directional or relative terms may be used herein. The term "longitudinal" refers to a direction, length or a location between the front and rear of the bicycle 20. The term "lateral" refers to a direction, length or location between the sides of the bicycle 20. Heights may be described as relative distances from a surface upon which the bicycle 20 is operated in a normal manner. Thus, the terms "above" or "below" generally apply to the bicycle as assembled, and being oriented as it would be normally ridden, or as it is depicted in any of the relevant figures. Front, rear, left, and right directions generally refer to those directions from the perspective of a rider normally seated on the bicycle 20.

With reference to Figure 1, the mountain bike 20 includes a frame assembly 22, a front wheel 24 and rear wheel 26. The frame assembly 22 supports a seat assembly 28 at a location spaced rearward from a handlebar assembly 30. The handlebar assembly 30 is rotatably supported by the frame assembly 22 and is coupled to the front wheel 24 such that rotation of the handlebar 30 results in rotation of the front wheel 24 about a steering axis As of the mountain bike 20.

The mountain bike 20 also includes a drive train 32 that is configured to allow a rider of the mountain bike 20 to supply power to one or both of the wheels 24, 26. In the illustrated arrangement, the drive train 32 includes a pedal crank 34 that is coupled to the rear wheel 26 by a multispeed chain drive transmission 36. The multispeed chain drive transmission 36 may include one or more gears, or chain rings, coupled to the pedal crank 34 and one or more gears, or sprockets, coupled to the rear wheel 26. The chain rings and sprockets are coupled by an endless drive chain that is capable of transmitting torque from the pedal crank 34 to the rear wheel 26. One or more shifting mechanisms, such as a derailleur, may be provided to shift the chain between the chain rings or sprockets. The shifting mechanism may be controlled by rider controls mounted on the handlebar assembly 30.

The mountain bike 20 includes front and rear brake assemblies 38, 40 associated with the front and rear wheels 24, 26, respectively. The brake assemblies 38, 40 may be controllable by a rider of the mountain bike 20, typically via hand controls provided on the handlebar 30. Although the illustrated brake assemblies 38, 40 are disc brakes, other suitable types of brakes assemblies, such as rim brakes, for example, may also be used.

Preferably, the rear wheel 26 is supported for movement relative to at least a portion of the frame assembly 22. More particularly, the frame assembly 22 includes a mainframe portion 42 and a subframe portion 44. The bicycle 20 also includes a shock absorber 46 as part of a rear suspension assembly 48 to influence movement of the subframe 44, and the rear wheel 26, relative to the mainframe 42. In the illustrated arrangement, the subframe 44 is a multi-linkage arrangement that includes a plurality of interconnected linkage members. However, as will be appreciated by one of skill in the art, a multitude of possibilities for the exact configuration of the mainframe 42 and subframe 44 are possible. Moreover, in some arrangements, the bike 20 may be of a rigid frame design, or hardtail, in which no rear suspension assembly 48 is provided. The mainframe 42 and subframe 44 may be of any suitable shape and may be constructed of any suitable material or combination of materials, as will be appreciated by one of skill in the art.

The mountain bike 20 also incorporates a front suspension assembly 50 that movably supports the front wheel 24 relative to the mainframe 42 of the frame assembly 22. The front suspension assembly 50 as illustrated herein is a suspension fork 50 that is supported at its upper end by the mainframe 42 for rotation relative to the frame assembly 22 of the mountain bike 20. The suspension fork 50 rotatably supports the front wheel 24 at its lower end. The handlebar 30 is coupled to the suspension fork 50 such that rotation of the handlebar 30 causes rotation of the front suspension fork 50, and thus the front wheel 24, about the steering axis As.

The present fork is described herein in the form of a front suspension fork for a mountain bike 20. As used herein, the term "fork" is used in its ordinary meaning and includes various forms of a fork for a vehicle and, in particular, for a bicycle. Thus, the term "fork" can have one or more legs or struts. In addition, linkage-type front suspension assemblies are also intended to fall within the definition of a "fork." Moreover, certain features, aspects and advantages may be utilized in other vehicles, as well. For example, certain features, aspects and advantages may be utilized in other two-wheeled vehicles, such as motorcycles, for example. In addition, certain features, aspects and advantages may be utilized in vehicles having another number of wheels, (e.g., an automobile) or having no wheels (e.g., a snowmobile).

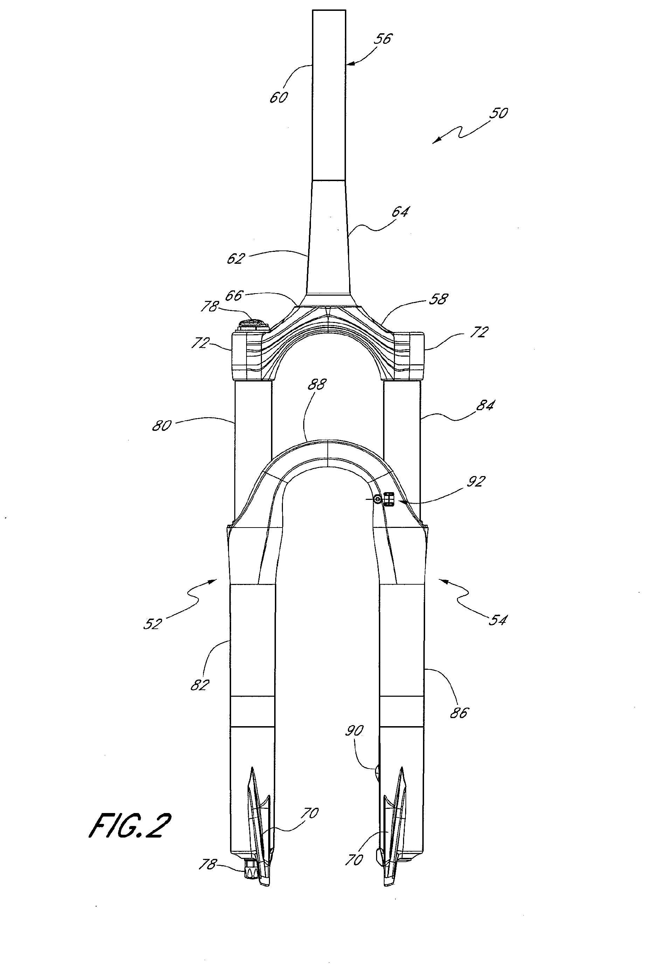

With reference to Figure 2, the suspension fork 50 is shown separated from the remainder of the mountain bike 20. In the illustrated arrangement, the suspension fork 50 includes a first fork leg 52 and a second fork leg 54 that straddle the front wheel 24 of the mountain bike 20. The upper ends of the fork legs 52, 54 are coupled to a steer tube, or steerer 56 through a crown 58. The steer tube 56 is received within a head tube of the mainframe 42 of the bicycle frame assembly 22.

As described above, a lower end of the suspension fork 50 is configured to carry the front wheel 24 of the mountain bike 20. In the illustrated arrangement, each fork leg 52, 54 includes a wheel mount 70 which cooperate with the another to support the front wheel 24. The wheel mounts 70 are often referred to as dropouts because the mounts 70 often include a generally vertical recess that is open at its lower end. The recess permits an axle of the front wheel 24 to "drop out" of the lower end of the recess when the wheel retention mechanism is loosened. However, the wheel mounts 70 may be of any suitable construction to support an axle of the front wheel 24, including the through-axle type mounting arrangement in which the wheel mounts 70 completely surround the axle of the front wheel 24. Other suitable arrangements may also be used.

The fork legs 52, 54 include an upper fork leg portion or stanchion tube 80, 84 ("upper fork leg or tube") and a lower fork leg portion 82, 86 ("lower fork leg or tube"). The respective upper and lower fork legs are telescopically engaged with one another such that an overall length of the fork leg 52, 54 may vary. The crown 58 may interconnect the upper ends of the upper fork legs 80, 84. Similarly, the lower fork legs 82, 86 maybe interconnected by an arch 88. The arch 88 preferably is integrally formed with the legs 82, 86. In one arrangement, the legs 82 and 86, the arch 88 and the wheel supports 70 are cast as a single piece. However, other suitable arrangements are possible as well. The crown 58 and the arch 88 resist twisting of the upper fork legs 80, 84 and lower fork legs 82, 86, respectively.

In the illustrated arrangement, the crown 58 is an arch-shaped member, but can be flat or some other design. End portions or "hoops" 72 of the crown 58 surround an upper end of a respective one of the fork legs 52, 54. The steer tube 56 extends upward from a center of the arch-shaped crown 58 and, may be integrally formed with the crown 58. However, in other arrangements, the steer tube 56 and crown 58 may be created by two or more pieces secured to one another.

As shown, the steer tube 56 has an upper end portion 60 that defines a first diameter and a lower end portion 62 that defines a second diameter. In one preferred arrangement, the diameter of the upper end portion 60 is approximately 1⅛ inches and the diameter of the lower end portion 62 is approximately 1½ inches. However, other suitable sizes for the steer tube 56 may also be used. A tapered transition portion 64 extends between the upper portion 60 and the lower portion 62.

As noted above, the steer tube 56 is rotatably supported by the frame assembly 22 of the mountain bike 20. In particular, the steer tube 56 is typically supported by a pair of bearings spaced from one another along an axis of the steer tube 56.

A relatively flat, narrow annular ledge 66 is defined by a relatively abrupt transition (at least as compared to the tapered transition 64) between the steer tube 56 and the crown 58. The ledge 66 is configured to be positioned adjacent a lower end of the head tube of the bicycle frame assembly 22 when the suspension fork 50 is assembled to the mountain bike 20 to provide a neat appearance to the transition between the suspension fork 50 and frame assembly 22.

The fork 50 preferably also includes a brake mount 90 that is configured to support the front brake 38. In addition, the fork 50 may also include a brake line mount 92 that is configured to receive and facilitate the retention of a brake line of the front brake 38.

The suspension fork 50 further can include a spring and/or damper as is known in the art. The suspension fork 50 can include certain controls 78 to control certain characteristics of the suspension. These controls can include, rebound adjust, damping control, shock compression, lockout and other adjustments. As shown, the controls 78 include adjustment knobs. Levers, switches, dials, and other types of controls can also be used.

**Manufacture of Bicycle Fork**

According to some embodiments, a method of manufacturing a bicycle fork, including a bicycle suspension fork, does not require the "press fit" method for attaching the stanchion tubes to the crown. In some embodiments of a method of manufacturing a bicycle fork, the stanchion tube to crown attachment is done using a high strength adhesive.

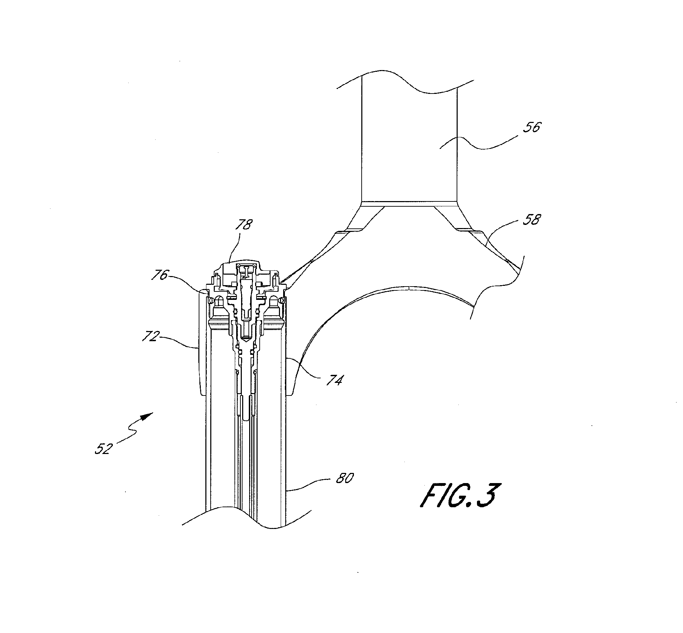

Referring now to Figures 3-4, bicycle forks and methods of manufacture according to some embodiments will be described. A crown 58 can be provided with end portions or hoops 72. Each end portion 72 can include a recess or channel 74. The recess or channel 74 can be configured to receive a fork leg 52 such as an upper fork leg portion or stanchion tube 80, such as the cylindrical recess illustrated.

The recess or channel 74 can include one or more openings. For example, the stanchion tube 80 can be advanced from the bottom of the crown 58 into the recess 74. The top of the crown 58 may also have an opening. Such an opening can provide access to controls 78 of the suspension fork or can be used with other features (Figure 3).

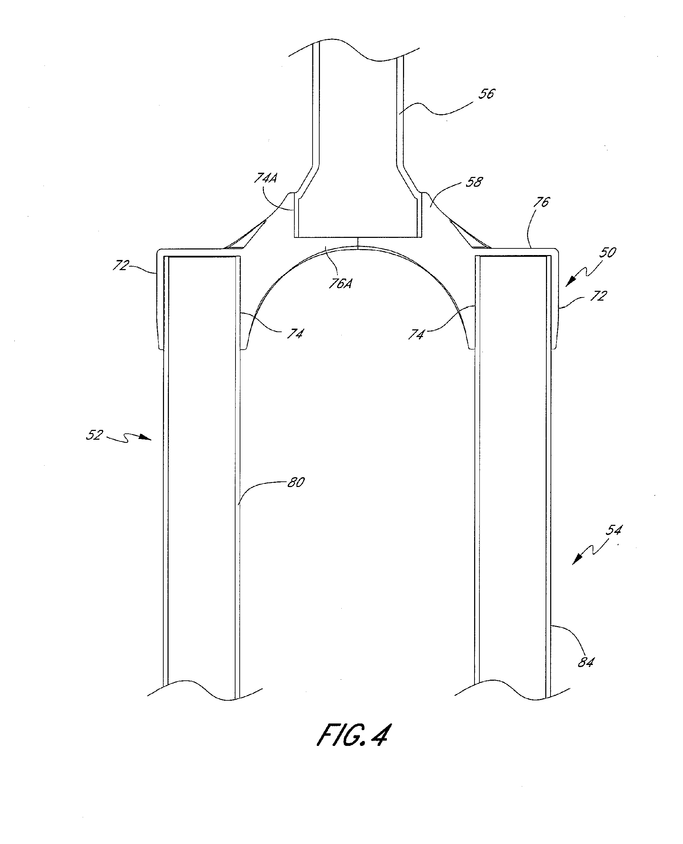

The recess 74 can also include a ledge or surface 76. The ledge or surface 76 can be used to abut a top edge of the stanchion tube 80 to ensure precise placement within the recess 74. In some embodiments, the surface 76 can be a top surface of the recess 74, such as where there is no opening on the top of the crown 58 above the recess 74 (figure 4). In other embodiments, the recess 74 can be a through hole such that there is no ledge or surface 76. With such a configuration, the stanchion tube 80 can be positioned within the recess 74 in other ways such as lining up the top edge with a top surface of the crown, or using aligning tools.

The stanchion tube 80 can have an outer surface with an outer diameter or perimeter that is smaller than the inner diameter or perimeter of the recess 74. This can allow for a slip fit between the stanchion tube 80 and the crown 58 with a small clearance or space between the two surfaces. Thus, the end of the stanchion tube 80 can be placed within the recess 74 with little to no resistance. In some embodiments, the clearance of the assembled components between the outer surface of the stanchion tube and the inner surface of the recess can be between about 0.001-0.015", 0.001-0.003", 0.003-0.009", 0.004-0.008", 0.005-0.007", 0.003-0.006", 0.006-0.009", and 0.009-0.015".

A high strength adhesive or glue can be used to attach the stanchion tube 80 to the crown. One example high strength adhesive is LOCTITE E-60HP HYSOL Epoxy Adhesive, available from Loctite Corp. U.S.A, 1001 Trout Brook Crossing, Rocky Hill, CT 06067. LOCTITE E-60HP is a toughened, medium viscosity, industrial grade epoxy adhesive. Some high strength adhesives can be two-component epoxies which require mixing and curing. The two components can be a resin and an accelerator.

A high strength adhesive can be prepared by mixing the two components. In some embodiments, the adhesive is supplied in a "dual cartridge" package that can be placed into a hand held dispensing gun. In some embodiments, the adhesive can be supplied in a dispenser configured to mix the two components in particular ratios as the material is dispensed. The material can be dispensed by pulling a trigger, squeezing the container, and/or advancing a plunger.

The adhesive can be applied to one or more surfaces to be bonded. In a preferred embodiment, adhesive is applied to all surfaces to be bonded. For example, the adhesive can be applied to the outer surface of the end of the stanchion tube 80 and the inner surface of the recess 74 of the crown 58. The quantity dispensed can be approximately 1 gram per assembly or 0.5 gram per fork leg/stanchion tube and crown recess. With the adhesive applied to the appropriate surface(s), the fork leg can be inserted into the recess 74. The assembled components can have a clearance of about 0.003 -0.009" at the bond juncture.

The assembly with applied adhesive can then be allowed to cure for a set period of time. For example, when using LOCTITE E-60HP, the assembly can be allowed to cure at room temperature for 24 hours to achieve high strength. In some embodiments, the assembly can cure for 12-48 hours. In some embodiments, the assembly can cure at a temperature other than room temperature, for example, at an elevated temperature. Technical data sheets are available from the various manufacturers of adhesives, such as high strength industrial two-part epoxy, which include charts and data of typical performance values of cured material properties.

The following are some examples of the benefits provided by the use of adhesive and a slip fit for the manufacture of bicycle forks, such as bicycle suspension forks. The "press fit" method requires an interference fit with 0.006-0.010" overlap, depending on the application. This is in contrast to the approximately 0.003-0.009" of clearance in the slip fit method to obtain the gap needed to maximize the strength of the adhesive. By eliminating the press fit between these parts, the wall thickness of the crown hoops can be reduced 40-60% while still maintaining equal or greater fatigue strength and stiffness. Also, the fork leg/stanchion tube wall thickness can be reduced by 20-40% while still maintaining equal or greater fatigue strength and stiffness. By reducing the wall thickness of these 2 parts, the weight reduction to the fork assembly is approximately 20-40% depending on the size and travel of the fork. Thus, it can be seen that using a slip fit allows for a great reduction in weight and size but also allows for optimal bonding of adhesive between components.

The sizes and percents given above are particularly related to the use and method of attaching aluminum stanchion tubes to aluminum crowns but, this same method of attachment could be used with other metals as well. Steel, magnesium and titanium have proven to be suitable material in certain designs and would also benefit from using a slip fit to allow for bonded attachment of portions of the bicycle fork components.

In addition, though the attachment of the fork leg and crown is described above, other components of the fork can also use a slip fit and bonding method of attachment. Referring to Figure 4, a steerer 56 is shown assembled to a crown 58. As illustrated, the steerer 56 is received into a recess or channel 74A. The steerer and crown can be assembled with a slip fit method similar to that described above. Similar benefits can be achieved when using this attachment method for joining the steerer tube to the crown.

The recess or channel 74A can include one or more openings. For example, the steerer 56 can be advanced from the top of the crown 58 into the recess 74A. The bottom of the crown 58 may also have an opening connecting to the recess 74A.

The recess 74A can also include a ledge or surface 76A. The ledge or surface 76A can be used to abut a bottom edge of the steerer 56 ensure precise placement within the recess 74A. In some embodiments, the surface 76A can be a bottom surface of the recess 74A, such as where there are no opening on the bottom of the crown 58 below the recess 74A. In other embodiments, the recess 74A can be a through hole such that there is no ledge or surface 76A. With such a configuration, the steerer 56 can be positioned within the recess 74A in other ways such as lining up the bottom edge with a bottom surface of the crown, or using aligning tools.

The steerer 56 can have an outer surface with an outer diameter or perimeter that is smaller than the inner diameter or perimeter of the recess 74A. This can allow for a slip fit between the steerer 56 and the crown 58 with a small clearance or space between the two surfaces. Thus, the end of the steerer 56 can be placed within the recess 74A with little to no resistance.

A high strength adhesive or glue can be used to attach the steerer 56 to the crown. The adhesive can be applied to one or more surfaces to be bonded. In a preferred embodiment, adhesive is applied to all surfaces to be bonded. For example, the adhesive can be applied to the outer surface of the end of the steerer 56 and the inner surface of the recess 74A of the crown 58. With the adhesive applied to the appropriate surface(s), the steerer 56 can be inserted into the recess 74A. The assembly with applied adhesive can then be allowed to cure for a set period of time.

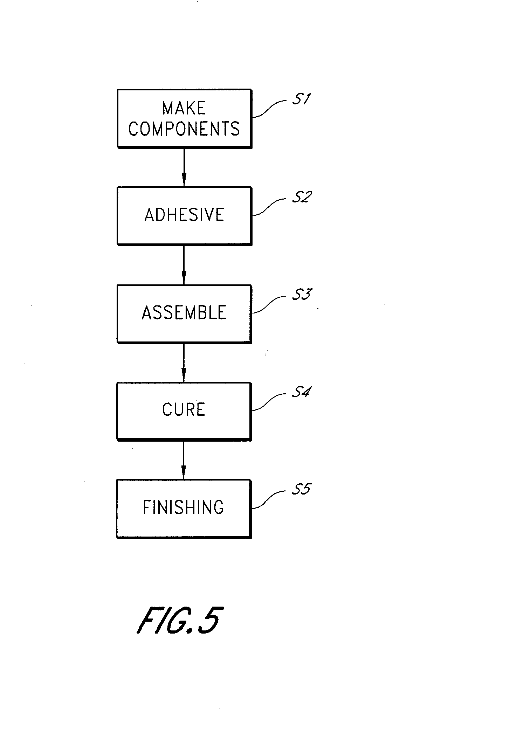

Looking now to Figure 5, a flow chart of a manufacturing method is provided. A manufacturing method can include the manufacturing S1 of the different components. For example, this can include forging an aluminum crown and/or anodizing aluminum stanchion tubes. Once the basic components are ready, one can move on to the adhesive step S2. This can include providing, preparing, mixing, applying the adhesive, and removing excess adhesive. Once the adhesive has been applied to the desired surfaces, the relevant components can be assembled S3. With the components assembled, the adhesive is then allowed time to cure S4. After curing the adhesive the assembly can be finished S5. Finishing can include additional assembly, deburing, adjusting, preparing adjustments to factory presets, testing, etc. The steps do not necessarily need to be performed in the order provided. For example, the excess adhesive may be removed after assembly.

Although this invention has been disclosed in the context of certain preferred embodiments and examples, it will be understood by those skilled in the art that the present invention extends beyond the specifically disclosed embodiments to other alternative embodiments and/or uses of the invention and obvious modifications and equivalents thereof. Additionally, it is contemplated that various aspects and features of the invention described can be practiced separately, combined together, or substituted for one another, and that a variety of combination and sub-combinations of the features and aspects can be made and still fall within the scope of the invention. Thus, it is intended that the scope of the present invention herein disclosed should not be limited by the particular disclosed embodiments described above, but should be determined only by a fair reading of the claims.

## Claims

1. A bicycle assembly comprising:
a bicycle suspension fork comprising:
a steerer configured to be received within a head tube of a bicycle frame;
a first leg comprising a first stanchion tube and a first lower leg portion configured for telescopic engagement, the first stanchion tube comprising metal, and the first leg configured to support a first wheel;
a crown configured to connect the first leg and the steerer, the crown having a first receiving portion comprising metal, the first stanchion tube configured for assembly into the first receiving portion with a first gap between the first receiving portion and the first stanchion tube;
a first adhesive portion configured to secure the first stanchion tube within the first receiving portion and configured to be positioned in the first gap between the first receiving portion and the first stanchion tube.

2. The bicycle assembly of Claim 1, wherein the fork further comprises:
a second leg comprising a second stanchion tube and a second lower leg portion the second stanchion tube comprising metal, and the first and second legs configured to support the first wheel;
wherein the crown is configured to connect the first and second legs and the steerer, the crown further comprising a second receiving portion comprising metal, the second stanchion tube configured for assembly into the second receiving portion with a second gap between the second receiving portion and the second stanchion tube; and
a second adhesive portion configured to be positioned in the second gap between the second receiving portion and the second stanchion tube.

3. The bicycle assembly of Claim 2, wherein the crown further comprising a third receiving portion comprising metal, the steerer comprising metal and configured for assembly into the third receiving portion with a third gap between an inner surface of the third receiving portion and an outer surface of the steerer; and
the bicycle suspension fork further comprises a third adhesive portion configured to secure the steerer within the third receiving portion and configured to be positioned in the third gap between the inner surface of the third receiving portion and the outer surface of the steerer.

4. The bicycle assembly of any of the previous claims, wherein at least one of the first, second and third gaps provide clearance of between approximately 0.003-0.009" to maximize the strength of the respective first, second, or third adhesive portion.

5. The bicycle assembly of any of the previous claims, wherein the metal comprises one or more of aluminum, steel, magnesium, and titanium.

6. The bicycle assembly of any of the previous claims, wherein the crown comprises a forged aluminum crown and either the first and second stanchion tubes comprise anodized aluminum.

7. The bicycle assembly of any of the previous claims, further comprising the bicycle frame, the first wheel and a second wheel.

8. A method of manufacturing an assembly for a bicycle comprising:
providing components for a bicycle suspension fork including a first stanchion tube, a second stanchion tube, and a crown, the crown having a first receiving portion and a second receiving portion, the first stanchion tube configured for assembly into the first receiving portion and the second stanchion tube configured for assembly into the second receiving portion;
applying a first portion of adhesive, to bond metal on metal, to at least one of the first receiving portion of the crown and an end portion of the first stanchion tube;
applying a second portion of adhesive, to bond metal on metal, to at least one of the second receiving portion of the crown and an end portion of the second stanchion tube;
inserting the end portion of the first stanchion tube into the first receiving portion, the first stanchion tube being received into first receiving portion with a slip fit, the first portion of adhesive filling at least a portion of a gap between the first stanchion tube and the first receiving portion, the first portion of adhesive contacting both the first receiving portion and the end portion of the first stanchion tube;
inserting the end portion of the second stanchion tube into the second receiving portion, the second stanchion tube being received into second receiving portion with a slip fit, the second portion of adhesive filling at least a portion of a gap between the second stanchion tube and the second receiving portion, the second portion of adhesive contacting both the second receiving portion and the end portion of the second stanchion tube;
curing the first portion of adhesive such that the first stanchion tube is securely attached to the crown; and
curing the second portion of adhesive such that the second stanchion tube is securely attached to the crown.

9. The method of Claim 8, further comprising anodizing the first and second stanchion tubes.

10. The method of any of Claims 8 and 9, further comprising providing a steer tube, the crown comprising a third receiving portion configured to receive the steer tube.

11. The method of Claim 10, further comprising applying third portion of adhesive, to bond metal on metal, to at least one of the third receiving portion of the crown and an end portion of the steer tube.

12. The method of Claim 11, further comprising inserting the end portion of the steer tube into the third receiving portion, the steer tube being received into third receiving portion with a slip fit, the third portion of adhesive filling at least a portion of a gap between the steer tube and the third receiving portion, the third portion of adhesive contacting both the third receiving portion and the end portion of the steer tube.

13. The method of Claim 12, further comprising curing the third portion of adhesive such that the steer tube is securely attached to the crown.

14. The method of any of Claims 8-13, wherein the first and second stanchion tubes and crown comprise aluminum, steel, magnesium, or titanium.

15. The method of any of Claims 8-14, further comprising forging the crown out of aluminum.
